(19) Europäisches Patentamt
European Patent Office
Office européen des brevets

(11) EP 4 789 983 A1

(12) EUROPEAN PATENT APPLICATION
published in accordance with Art. 153(4) EPC

(43) Date of publication:
**12.08.2026 Bulletin 2026/33**

(21) Application number: **24874597.8**

(22) Date of filing: **01.10.2024**

(51) International Patent Classification (IPC):
***B65D 65/40*** *(2006.01)* ***B32B 27/32*** *(2006.01)*

(52) Cooperative Patent Classification (CPC):
**B32B 27/32; B65D 65/40**

(86) International application number:
**PCT/JP2024/035096**

(87) International publication number:
**WO 2025/074995 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.10.2023 JP 2023171559**

(71) Applicant: **Taisei Kako Co., Ltd.**
**Kita-ku**
**Osaka-shi**
**Osaka 531-0072 (JP)**

(72) Inventor: **HAYANO, Shingo**
**Ibaraki-shi, Osaka 567-0054 (JP)**

(74) Representative: **Haseltine Lake Kempner LLP**
**Bürkleinstrasse 10**
**80538 München (DE)**

# (54) PTP PACKAGING SHEET

(57) The present invention aims to provide a PTP packaging sheet formed using, as a material, a polypropylene resin containing biomass-derived polypropylene.

The present invention relates to a PTP packaging sheet including at least one polypropylene resin layer containing biomass-derived polypropylene, the at least one polypropylene resin layer having a biomass-derived polypropylene content of 10% by mass or more.

FIG. 1

1
2
3
2



Processed by Luminess, 75001 PARIS (FR)

**Description**

TECHNICAL FIELD

The present invention relates to PTP packaging sheets.

TECHNICAL FIELD

Medicines, foods, and the like in tablet, capsule, or other forms are usually distributed as PTP packages in which the medicines, foods, and the like are placed in the pockets with a predetermined depth (deep-drawn portions) formed in a transparent plastic press-through pack packaging sheet (hereinafter referred to as a "PTP packaging sheet") and the openings are sealed with a sealing material (a lid material) such as aluminum foil. The medicines, foods, and the like stored in the pockets can be taken out from the sealing material by, for example, pressing the pockets with fingers for administration or consumption.

A PTP package typically includes storing portions each having one pocket for storing an object such as a medicine or a food. The PTP packaging sheet is required to be transparent so that the state of a stored object can be observed. Furthermore, to prevent contamination of a stored object by substances eluted from the PTP packaging sheet and damage or deformation of a stored object caused by external impact or influence, the PTP packaging sheet is required to have properties such as preservability of an object, impact resistance, and UV resistance. Specifically, regarding the preservability of an object, the amount of n-heptane extractables from the sheet at 100°C is 150 μg/mL or less, which is determined by the test specified in Ministry of Health and Welfare Notification No. 370. Furthermore, the PTP packaging sheet is required to have water vapor barrier properties to ensure the quality of a stored object and have thermoformability for forming the sheet in conformity with the shape of a stored object.

Polypropylene-based resins are used as materials for PTP packaging sheets. Polypropylene-based resins for PTP packaging sheets are produced using polypropylene homopolymers, and usually contain petroleum resins to enhance water vapor barrier properties. However, since petroleum resins are extractable by n-heptane extraction, PTP packaging sheets containing a large amount of petroleum resins fail the test specified in Ministry of Health and Welfare Notification No. 370. Accordingly, the amount of petroleum resins that can be added to enhance water vapor barrier properties is limited. Although a random polypropylene may be used as a material to enhance the thermoformability of PTP packaging sheets, the use of a random polypropylene reduces water vapor barrier properties. Therefore, PTP packaging sheets including polypropylene-based resins are required to have a good balance of preservability of an object, water vapor barrier properties, and thermoformability. For example, Patent Literature 1 discloses a PTP packaging sheet including a polypropylene-based resin, the PTP packaging sheet having a good balance between hygiene and water vapor barrier properties, which are related to storage stability of a stored object, and also having a good balance between water vapor barrier properties and thermoformability.

In recent years, environmentally friendly resin materials including biomass-derived materials have also been studied. Also regarding polypropylene-based resins, polypropylene-based resins containing biomass-derived polypropylene have been developed. From the perspective of reducing environmental impact, films and formed articles including polypropylene-based resins containing biomass-derived polypropylene have also been developed, instead of conventional films and formed articles generally formed from petroleum-derived polypropylene-based resins. For example, Patent Literature 2 discloses a monolayer body and a laminate each containing biomass-derived polypropylene, and a molded body including a monolayer body and/or a laminate. They can greatly reduce the amount of fossil fuel used compared to the past, reduce environmental impact, and have good mechanical properties and transparency. Furthermore, Patent Literature 3 discloses a non-stretched film containing a plant-derived resin. By containing a plant-derived resin, the film achieves a reduction in environmental impact and has excellent transparency, mechanical strength, and heat resistance.

CITATION LIST

- Patent Literature

Patent Literature 1: JP 2009-083111 A
Patent Literature 2: JP 2022-152666 A
Patent Literature 3: JP 2022-61847 A

SUMMARY OF INVENTION

- Technical Problem

However, for a PTP packaging sheet containing a polypropylene-based resin as a main component, the partial replacement of the polypropylene-based resin with biomass-derived polypropylene to reduce environmental impact has not been considered. Accordingly, development of a PTP packaging sheet formed using a polypropylene resin containing biomass-derived polypropylene as a material has been desired.

Furthermore, there has been insufficient investigation into PTP packaging sheets formed using a polypropylene resin containing biomass-derived polypropylene as a material, in terms of their preservability of an object, water vapor barrier properties, and thermoformability.

The present invention has been made in view of the above circumstances, and aims to provide a PTP packaging sheet formed using, as a material, a polypropylene resin containing biomass-derived polypropylene.

- Solution to Problem

As a result of intensive studies with the aim of solving the above problems, the present inventors have found that the problems can be solved by the following exemplary configurations, and the present invention has thus been completed. The exemplary configurations of the present invention are as follows.

(1) A PTP packaging sheet including
at least one polypropylene resin layer containing biomass-derived polypropylene, the at least one polypropylene resin layer having a biomass-derived polypropylene content of 10% by mass or more.
(2) The PTP packaging sheet according to (1) above,
wherein an amount of n-heptane extractables from surfaces of the PTP packaging sheet is 150 μg/mL or less.
(3) The PTP packaging sheet according to (1) or (2) above,
wherein the at least one polypropylene resin layer further contains a petroleum resin.
(4) The PTP packaging sheet according to (3) above,
wherein the at least one polypropylene resin layer has a petroleum resin content of 1% by mass or more and 13% by mass or less.
(5) The PTP packaging sheet according to any one of (1) to (4) above,
wherein the at least one polypropylene resin layer further contains petroleum-derived polypropylene in the form of a homopolymer and/or a random copolymer.
(6) The PTP packaging sheet according to (5) above,
wherein the at least one polypropylene resin layer has a petroleum-derived polypropylene content of 15% by mass or more and 90% by mass or less.
(7) The PTP packaging sheet according to any one of (1) to (3) and (6) above,
wherein the PTP packaging sheet has a multi-layer structure and includes surface resin layers each defining an outermost surface and having a petroleum resin content of 13% by mass or less.
(8) The PTP packaging sheet according to (7) above,
wherein the surface resin layer contains biomass-derived polypropylene, and the surface resin layer has a biomass-derived polypropylene content of 40% by mass or less.

- Advantageous Effects of Invention

The present invention provides a PTP packaging sheet formed using, as a material, a polypropylene resin containing biomass-derived polypropylene.

BRIEF DESCRIPTION OF DRAWINGS

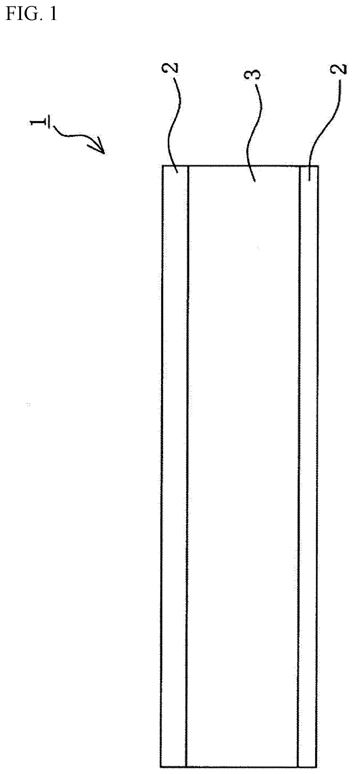

FIG. 1 is a schematic diagram of a PTP packaging sheet according to the present invention having a multi-layer structure.

DESCRIPTION OF EMBODIMENTS

<PTP packaging sheet>

The PTP packaging sheet according to the present invention (hereinafter also referred to as "sheet of the present invention") includes at least one polypropylene resin layer containing biomass-derived polypropylene, the at least one polypropylene resin layer having a biomass-derived polypropylene content of 10% by mass or more.

It suffices that the sheet of the present invention includes at least one polypropylene resin layer containing biomass-derived polypropylene. The sheet of the present invention may be a single-layer sheet consisting of a polypropylene resin layer containing biomass-derived polypropylene (hereinafter also referred to as "layer A"), or may be a multi-layer sheet including a layer A. When the sheet of the present invention is the multi-layer sheet, it may include two or more layers A and may include two or more layers different from a layer A (hereinafter also referred to as "layer B").

When the sheet of the present invention includes two or more layers A, the two or more layers A may be the same as or different from each other. When the sheet of the present invention includes two or more layers B, the two or more layers B may be the same as or different from each other.

Examples of the layer B include a layer containing a resin and having a biomass-derived polypropylene content of less than 10% by mass, based on 100% by mass of the resins constituting the layer B, as well as a layer free from biomass-derived polypropylene.

Suitable examples of the sheet of the present invention include a single-layer sheet consisting of a layer A, a two-layer sheet consisting of a layer A and a layer B stacked on each other, a layer B-surface-type multi-layer sheet including a layer A as an intermediate layer and a layer B as each surface layer, and a layer A-surface-type multi-layer sheet including a layer A or a layer B as an intermediate layer and a layer A as each surface layer. Examples of the layer B-surface-type multi-layer sheet include a multi-layer sheet in which a layer B, a layer A, and a layer B are sequentially stacked, a multi-layer sheet in which a layer B, a layer B, a layer A, a layer B, and a layer B are sequentially stacked, and a multi-layer sheet in which a layer B, a layer A, a layer B, a layer A, and a layer B are sequentially stacked. Examples of the layer A-surface-type multi-layer sheet include a multi-layer sheet including a layer A as a central layer and a layer A as each surface layer (i.e., a layer A, a layer A, and a layer A are sequentially stacked), a multi-layer sheet in which a layer A, a layer B, and a layer A are sequentially stacked, a multi-layer sheet in which a layer A, a layer A, a layer B, a layer A, and a layer A are sequentially stacked, and a multi-layer sheet in which a layer A, a layer B, a layer A, a layer B, and a layer A are sequentially stacked. Preferred among these are a single-layer sheet consisting of a layer A, a two-layer sheet consisting of a layer A and a layer B stacked on each other, a layer A-surface-type multi-layer sheet including a layer A as a central layer and a layer A as each surface layer (i.e., a layer A, a layer A, and a layer A are sequentially stacked), and a layer B-surface-type multi-layer sheet in which a layer B, a layer A, and a layer B are sequentially stacked. Adjacent layers stacked on each other may be laminated together, and two or more layers may be laminated.

The sheet of the present invention may be a multi-layer-type sheet in which a layer such as a gas barrier layer (e.g., an oxygen barrier layer), a gas absorbing layer, a water vapor-proof layer, a light-shielding layer, or a bleed-out prevention layer is stacked on one or both sides of the single-layer sheet or multi-layer sheet, as required.

(Biomass-derived polypropylene)

An example of a method for producing biomass-derived polypropylene is a method including producing biopropane using vegetable oil (including waste oils such as waste-derived oi and residual oil) as a raw material, and then dehydrogenating the biopropane to produce propylene, thereby producing biopolypropylene. The biomass-derived polypropylene may contain propylene other than biomass-derived propylene.

The biomass-derived polypropylene used for the sheet of the present invention may or may not contain a nucleating agent, and may be a commercially available product. Non-limiting examples of commercially available products of biomass-derived polypropylene include "C14 HP640J", "C14 HP456J", "C14 EP448T", and "C14 EP348U", which are available from LyondellBasell.

The polypropylene resin layer containing biomass-derived polypropylene (layer A) of the sheet of the present invention may contain any biomass-derived polypropylene. The biomass-derived polypropylene refers to a propylene homopolymer, a copolymer of propylene and ethylene, a copolymer of propylene and a C4-C8 $\alpha$-olefin, or a copolymer of propylene, ethylene, and a C4-C8 $\alpha$-olefin, with a random copolymer being preferred. Specific examples of a C4-C8 $\alpha$-olefin include, but are not limited to, 1-butene, 4-methyl-1-pentene, 1-pentene, 1-hexene, and 1-octene. The above-described monomer components constituting the biomass-derived polypropylene other than propylene may be used alone or in combination of two or more. The biomass-derived polypropylenes described above may be used alone or in combination of two or more.

The polypropylene resin layer containing biomass-derived polypropylene (layer A) of the sheet of the present invention has a biomass-derived polypropylene content of 10% by mass or more, based on 100% by mass of the polypropylene-based resin constituting the polypropylene resin layer (layer A). The biomass-derived polypropylene content refers to a value of the biomass-derived carbon content determined by radiocarbon (C14) measurement. It is known that since atmospheric carbon dioxide contains a certain proportion of C14 (107 pMC), the C14 content of oil of plants that grow by absorbing atmospheric carbon dioxide is also approximately 107 pMC. It is also known that fossil fuels contain very little C14. Therefore, by measuring the C14 content in the polypropylene resin layer containing biomass-derived polypropylene (layer A) of the sheet of the present invention, the proportion of biomass-derived carbon can be calculated, and the biomass-derived polypropylene content (% by mass) in the layer A can be calculated. When the C14

content in the polypropylene resin layer (layer A) of the sheet of the present invention is defined as Pc14, the biomass-derived polypropylene content (% by mass) can be calculated using the following formula:

(Biomass-derived polypropylene content in layer A) (% by mass) = 100 × (Pc14 of layer A)/107

The biomass-derived polypropylene content in the polypropylene resin layer containing biomass-derived polypropylene (layer A) of the sheet of the present invention can theoretically be 100% by mass, based on 100% by mass of the polypropylene-based resin constituting the polypropylene resin layer (layer A), and may be, for example, 80% by mass or less. The biomass-derived polypropylene content in the polypropylene resin layer (layer A) is preferably 60% by mass or less, more preferably 40% by mass or less.

Preferably, the amount of n-heptane extractables from the surfaces of the sheet of the present invention is 150 μg/mL or less. When the amount of n-heptane extractables from the surfaces of the sheet of the present invention is within the above-described range, the sheet of the present invention can have preservability of an object. The amount of n-heptane extractables is measured by the n-heptane extraction test specified in Ministry of Health and Welfare Notification No. 370. When the sheet of the present invention is a single-layer sheet consisting of a layer A, the surfaces of the sheet of the present invention refer to the surfaces of the layer A. When the sheet of the present invention is a multi-layer sheet including a layer A, the surfaces of the sheet of the present invention refer to the surfaces of the layers each defining an outermost surface. When the sheet of the present invention is a multi-layer sheet, the layers each defining an outermost surface may each be either a layer A or a layer B. Either layer may be used, as long as the amount of n-heptane extractables specified in Ministry of Health and Welfare Notification No. 370 is within the reference value range of 150 μg/mL or less. Furthermore, as long as the amount of n-heptane extractables from the surfaces of the sheet of the preset invention is within the range of 150 μg/mL or less, the surface layers (a layer A when the sheet is a single-layer sheet) of the sheet of the present invention may contain various additives as needed.

The polypropylene resin layer containing biomass-derived polypropylene (layer A) of the sheet of the present invention preferably further contains a petroleum resin. When the polypropylene resin layer containing biomass-derived polypropylene (layer A) contains a petroleum resin, the water vapor barrier properties and thermoformability of the sheet of the present invention are enhanced. Examples of the petroleum resin include petroleum resins such as C5 petroleum resin, C9 petroleum resin, and C5-C9 copolymer petroleum resin, alicyclic hydrocarbon petroleum resins such as dicyclopentadiene petroleum resin, and hydrogenated derivatives thereof.

The petroleum resin may be contained in polypropylene containing petroleum-derived polypropylene.

In the sheet of the present invention, the polypropylene resin layer containing biomass-derived polypropylene (layer A) preferably has a petroleum resin content of 1% by mass or more and 13% by mass or less. If the petroleum resin content in the layer A is less than 1% by mass, based on 100% by mass of the polypropylene-based resin constituting the layer A, the water vapor permeability of the layer A is not sufficiently reduced, potentially resulting in a decrease in water vapor barrier properties. Furthermore, in blister formation using the sheet of the present invention, blister formability in a low temperature range may be insufficient, potentially resulting in a decrease in thermoformability. On the other hand, if the petroleum resin content in the layer A exceeds 13% by mass, based on 100% by mass of the polypropylene-based resin constituting the layer A, the amount of n-heptane extractables may increase, potentially resulting in a decrease in preservability of an object by the sheet of the present invention. When the petroleum resin content in the layer A is within the above range, the sheet of the present invention is preferably a single-layer sheet consisting of a layer A or a layer A-surface-type multi-layer sheet including a layer A as each outermost layer.

The polypropylene resin layer containing biomass-derived polypropylene (layer A) of the sheet of the present invention preferably further contains petroleum-derived polypropylene in the form of a homopolymer and/or a random copolymer. This is because the thermoformability of the sheet of the present invention is enhanced by containing petroleum-derived polypropylene (hereinafter also referred to as petroleum-derived PP) in addition to biomass-derived polypropylene (hereinafter also referred to as biomass-derived PP) in the layer A of the sheet of the present invention.

In the sheet of the present invention, the polypropylene resin layer (layer A) preferably has a petroleum-derived polypropylene content of 15% by mass or more and 90% by mass or less, based on 100% by mass of the polypropylene-based resin constituting the layer A. If the petroleum-derived polypropylene content in the polypropylene resin layer (layer A) is less than 15% by mass, based on 100% by mass of the polypropylene-based resin constituting the layer A, the effect of enhancing thermoformability may be insufficient, while if it exceeds 90% by mass, the biomass-derived PP content in the layer A decreases, resulting in a decrease in the effect of reducing environmental impact. The petroleum-derived polypropylene content in the polypropylene resin layer (layer A) is more preferably 89% by mass or less, still more preferably 85% by mass or less, still further more preferably 80% by mass or less, particularly preferably 77% by mass or less, based on 100% by mass of the polypropylene-based resin constituting the layer A.

Non-limiting examples of the petroleum-derived polypropylene include propylene homopolymers and copolymers of propylene with at least one selected from ethylene and α-olefins having four or more carbon atoms. Examples of

the $\alpha$-olefins having four or more carbon atoms include 1-butene, 1-pentene, 1-hexene, 1-octene, 1-heptene, 4-methyl-pentene-1,4-methyl-hexene-1, and 4,4-dimethylpentene-1.

The proportion of structural units derived from propylene in the petroleum-derived polypropylene is preferably 50% by mass or more, more preferably 76% by mass or more, still more preferably 80% by mass or more, still further more preferably 85% by mass or more.

When the sheet of the present invention has a multi-layer structure, the sheet includes surface resin layers each defining an outermost surface and having a petroleum resin content of 13% by mass or less, based on 100% by mass of the resins constituting the surface resin layer. If the petroleum resin content in each surface resin layer defining an outermost surface exceeds 13% by mass, the amount of n-heptane extractables may increase, potentially resulting in a decrease in preservability of an object by the sheet of the present invention. The surface resin layer may be a layer A or a layer B. Furthermore, when the sheet of the present invention is a multi-layer sheet having a multi-layer structure and includes a layer A as an intermediate layer, the layer A as an intermediate layer may have any petroleum resin content. For example, the content may be more than 13% by mass.

When the sheet of the present invention has a multi-layer structure, each surface resin layer preferably contains biomass-derived polypropylene, and the surface resin layer preferably has a biomass-derived polypropylene content of 40% by mass or less, based on 100% by mass of the resins constituting the surface resin layer. In other words, the surface resin layer may be a layer A or a layer B, but preferably has a biomass-derived polypropylene content of 40% by mass or less. When each surface resin layer is a layer A and has a biomass-derived polypropylene content of 10% by mass or more and 40% by mass or less, the sheet of the present invention achieves a further reduction in environmental impact. When each surface resin layer is a layer B and has a biomass-derived polypropylene content of less than 10% by mass, the sheet includes a layer A as an intermediate layer. The presence of the layer A allows the sheet as a whole to achieve a reduction in environmental impact.

The polypropylene-based resin constituting the polypropylene resin layer containing biomass-derived polypropylene (layer A) of the sheet of the present invention preferably has an MFR, measured in accordance with JIS K 7210 (230°C, 2.16 kg of load), of 0.1 to 10 g/10 min, more preferably 0.3 to 7 g/10 min.

The use of a polypropylene-based resin having an MFR within the above range is preferred because it provides better formability during production of the sheet of the present invention.

The sheet of the present invention may optionally contain various additives in a polypropylene resin layer containing biomass-derived polypropylene (layer A) and/or a layer B, to the extent that the effects of the present invention are not impaired. Examples of the various additives include dispersants, stabilizers such as heat stabilizers and light stabilizers, neutralizing agents, UV absorbers, softeners, plasticizers, lubricants, processing aids, reinforcing agents, coloring pigments, UV scattering agents, antistatic agents, antioxidants, nucleating agents, and various fillers. These components may each be used alone or in combination of two or more.

Examples of the coloring pigments include condensed azo pigments, insoluble azo pigments, quinacridone, isoindoline, anthraquinone, imidazolone, cobalt, phthalocyanine, carbon, titanium oxide, iron oxide, and pearlescent pigments such as mica. Examples of the fillers include talc, calcium carbonate, silica, alumina, carbon black, zinc oxide, zeolite, hydrotalcite, glass fiber, paper powder, and wood powder. Examples of the heat stabilizers include hindered phenolic stabilizers, sulfur-based stabilizers, and phosphorus-based stabilizers. Examples of the neutralizing agents include metal stearates and hydrotalcite. Examples of the UV absorbers include benzotriazole-based UV absorbers, benzoate-based UV absorbers, benzophenone-based UV absorbers, and benzotriazine-based UV absorbers. Examples of the light stabilizers include hindered amine light stabilizers. Examples of the lubricants include hydrocarbon-based lubricants, fatty acids, fatty acid amide-based lubricants, metal soap-based lubricants, ester-based lubricants, and fluorine-based lubricants. Examples of the nucleating agents include sorbitol-based nucleating agents.

<Method of producing sheet of the present invention>

The sheet of the present invention can be produced, for example, by adding any of the above-listed components as needed to the polypropylene-based resin constituting the polypropylene resin layer containing biomass-derived polypropylene (layer A), and forming the resulting mixture into a sheet using a known method such as single-layer T-die melt forming, calendering, or extrusion molding. When the sheet of the present invention has a multi-layer structure, it can be produced using a method similar to that for producing conventional laminates. For example, when the sheet of the present invention is the layer B-surface-type multi-layer sheet, it may be produced by stacking a sheet forming a layer B on each side of a layer A and then thermally bonding them together, or by bonding sheets forming layers to each other with an adhesive layer or the like. Furthermore, to obtain a multi-layer sheet with good interlayer adhesion, a surface of any of the layers forming the multi-layer sheet may be pretreated in advance by corona treatment, low-temperature plasma treatment, ion bombardment treatment, chemical treatment, solvent treatment, or other treatment.

Furthermore, when the sheet of the present invention has a multi-layer structure, it can also be produced by a general multi-layer sheet forming method, such as a co-extrusion method including a multi-layer T-die method or a multi-

layer inflation method, extrusion coating, dry lamination, heat lamination, or a casting method such as a wet casting method or a dry casting method, using raw materials for each layer, or if necessary, a mixture prepared by pre-mixing raw materials for each layer. The temperature during co-extrusion can be appropriately selected depending on the raw materials used, and is preferably 160°C to 300°C, more preferably 180°C to 250°C. For example, the temperature during extrusion of the layer A may be different from the temperature during extrusion of the layer B.

## EXAMPLES

The present invention is described in more detail below with reference to examples, but the present invention is not limited to these examples.
The components used in the examples and comparative examples are as follows.

(Biomass PP containing biomass-derived polypropylene)

- "Circulen Renew C14 HP640J" (available from LyondellBasell, a renewable raw material made from bio-based waste oil and residual oil), MFR = 3.2 g/10 min, biomass-derived PP content: 36%
- "Circulen Renew C14 HP456J" (available from LyondellBasell, a renewable raw material made from bio-based waste oil and residual oil, free from nucleating agents), MFR = 3.4 g/10 min, biomass-derived PP content: 25.2%

(Petroleum-derived polypropylene)

- "Novatec FY6" homo PP (available from Japan Polypropylene Corporation), MFR = 2.5 g/10 min
- "Novatec EG7F" random PP, ethylene-propylene random copolymer (available from Japan Polypropylene Corporation), MFR = 1.3 g/10 min
- Homo PP containing a petroleum resin, petroleum resin content: 24%
- Petroleum resin

<Examples 1 to 4 and Comparative Examples 1 and 2>

PTP packaging sheets of Examples 1 to 4 and Comparative Examples 1 and 2 were produced as follows.
The resin components shown in Table 1 were mixed according to the formulation shown in Table 1, and the resulting mixture was melt-kneaded and extruded at a resin temperature of 200°C to produce each of the PTP packaging sheets with a thickness of 250 μm.
The resulting PTP packaging sheets of the examples and the comparative examples were subjected to the following evaluation tests.

(1) n-Heptane extraction test

Measurement was carried out using the n-heptane extraction test in accordance with the test specified in Ministry of Health and Welfare Notification No. 370.

(2) Water vapor permeability (MOCON method)

The water vapor transmission rates of the sheets were measured under the following conditions using the following measuring apparatus.

Measurement conditions: 40°C, 91% RH
Measuring apparatus: PERMATRAN-W 3/34 (available from MOCON, Inc.)

(3) Blister formability (FBP-M2)

Regarding the blister formability of the sheets, the sheets were formed into articles under the following conditions, and the formed articles were visually inspected. Testing machine: PTP forming machine FBP-M2 (available from CKD Corporation) Pocket size: φ11 × 4 mm

Blow pressure: 5.0 $kgf/cm^2$
Plug pressure: 3.0 $kgf/cm^2$
Forming temperature: 110°C to 145°C

The blister formability was evaluated as follows: a case in which a blister forming temperature range, which is defined as a temperature range in which an acceptable blister formed article is obtained, was lower than 140°C was rated as "○", and a case in which the blister forming temperature range was 140°C or higher was rated as "Δ".

The results obtained from the above evaluation tests are shown in Table 1.

[Table 1]

| | Biomass PP C14 HP640J (% by mass) | | | Biomass PP C14HP456J (% by mass) | | | Petroleum-derived homo PP FY6 (% by mass) | Petroleum-derived randomPP EG7F (% by mass) | PP containing petroleum resin (% by mass) | | | n-Heptane extraction test | | Water vapor permeability (MOCON method) | Blister formability FBP-M2 | |
|---|---|---|---|---|---|---|---|---|---|---|---|---|---|---|---|---|
| | Biomass-derived PP | Petroleum-derived PP | Total | Biomas s-derived PP | Petroleum-derived PP | Total | | | Petroleum resin | Homo PP | Total | μg/mL | Pass/Fail | $g/(m^2 \cdot d)$ | °C | Evaluation |
| Comparative Example 1 | - | - | - | - | - | - | 82.5 | 17.5 | - | - | - | 6 | Pass | 1.20 | 136 to 138 | ○ |
| Comparative Example 2 | - | - | - | - | - | - | 70.0 | 17.5 | 3.0 | 9.5 | 12.5 | 36 | Pass | 1.10 | 134 to 138 | ○ |
| Example 1 | 29.7 | 52.8 | 82.5 | - | - | - | - | 17.5 | - | - | - | 3 | Pass | 1.06 | 140 to 142 | Δ |
| Example 2 | 25.2 | 44.8 | 70.0 | - | - | - | - | 17.5 | 3.0 | 9.5 | 12.5 | 20 | Pass | 0.91 | 138 to 142 | ○ |
| Example 3 | 36.0 | 64.0 | 100.0 | - | - | - | - | - | - | - | - | 0.33 | Pass | 0.96 | 144 | Δ |
| Example 4 | - | - | - | 25.2 | 44.8 | 70.0 | - | 17.5 | 3.0 | 9.5 | 12.5 | 39 | Pass | 1.20 | 136 to 140 | ○ |

Table 1 indicates that the sheets of Examples 1 to 4 containing biomass-derived PP have water vapor permeability comparable to or lower than those of the sheets of Comparative Examples 1 and 2, thereby exhibiting excellent water vapor barrier properties. Furthermore, compared with the sheet of Comparative Example 1, the sheet of Example 1 has a blister forming temperature range, which is defined as a temperature range in which an acceptable blister formed article is obtained, in a higher temperature region; however, thermoformability is confirmed in the temperature range of 140°C to 142°C. Furthermore, compared to the sheet of Example 1, which is free from petroleum resins, the sheets of Examples 2 and 4 containing biomass-derived PP and a petroleum resin have wider blister forming temperature ranges of 138°C to 142°C (Example 2) and 136°C to 140°C (Example 4), respectively, and have excellent thermoformability. The biomass PP containing biomass-derived polypropylene used in the sheet of Example 2 is a raw material containing a nucleating agent, while the biomass PP containing biomass-derived polypropylene used in the sheet of Example 4 is a raw material free from nucleating agents. The sheet of Example 2 produced from the biomass PP containing a nucleating agent has better water vapor permeability. The sheet of Example 3 produced using 100% biomass PP containing biomass-derived polypropylene has an excellent n-heptane extraction test result of 0.33, and has a blister forming temperature range in a higher temperature region; however, thermoformability at 144°C is confirmed.

<Examples 5 to 13 and Comparative Examples 3 to 7>

Plates of Examples 5 to 13 and Comparative Examples 3 to 7 were produced as follows.

The resin components shown in Table 2 were mixed according to the formulation shown in Table 2, and the resulting mixture was melt-kneaded at a resin temperature of 230°C and injection-molded to produce each of the plates with a thickness of 1 mm and dimensions of 50 mm × 80 mm.

The resulting plates of the examples and the comparative examples were subjected to the n-heptane extraction test. Furthermore, whether the biomass-derived polypropylene content of each plate was 10% by mass or more was determined, and the plates of the examples and the plates of the comparative examples were evaluated for a reduction in environmental impact. The results are shown in the following Table 2.

[Table 2]

| No. | Biomass PP C14 HP640J (% by mas s) | | | Petroleum-derived random PP EG7F (% by mass) | PP containing petroleumresin (% by mass) | | | n-Heptane extraction test | | Reduction in environmental impact |
|---|---|---|---|---|---|---|---|---|---|---|
| | Biomas s -derived PP | Petroleum-derived PP | Total | | Petroleum resin | Homo PP | Total | μg/mL | Pass/Fail | Pass/Fail |
| Example 5 | 29.7 | 52.8 | 82.5 | 17.5 | - | - | - | 6 | Pass | Pass |
| Example 6 | 25.2 | 44.8 | 70.0 | 17.5 | 3.0 | 9.5 | 12.5 | 18 | Pass | Pass |
| Example 7 | 22.14 | 39.36 | 61.5 | 17.5 | 5.04 | 15.96 | 21.0 | 38 | Pass | Pas s |
| Example 8 | 19.26 | 34.24 | 53.5 | 17.5 | 6.96 | 22.04 | 29.0 | 66 | Pass | Pas s |
| Example 9 | 14.58 | 25.92 | 40.5 | 17.5 | 10.08 | 31.92 | 42.0 | 83 | Pass | Pass |
| Example 10 | 11.7 | 20.8 | 32.5 | 17.5 | 12.0 | 38.0 | 50.0 | 144 | Pass | Pass |
| Comparative Example 3 | 8.82 | 15.68 | 24.5 | 17.5 | 13.92 | 44.08 | 58.0 | 192 | Fail | Fail |
| Comparative Example 4 | 5.58 | 9.92 | 15.5 | 17.5 | 16.08 | 50.92 | 67.0 | 247 | Fail | Fail |
| Comparative Example 5 | 4.5 | 4.8 | 9.3 | 17.5 | 18.0 | 57.0 | 75.0 | 344 | Fail | Fail |
| Comparative Example 6 | - | - | - | 17.0 | 19.92 | 63.08 | 83.0 | 500 | Fail | Fail |
| Comparative Example 7 | - | - | - | - | 24.0 | 76.0 | 100.0 | 718 | Fail | Fail |
| Example 11 | 28.44 | 50.56 | 79.0 | - | 5.04 | 15.96 | 21.0 | 27 | Pass | Pass |
| Example 12 | 10.44 | 18.56 | 29.0 | 50.0 | 5.04 | 15.96 | 21.0 | 34 | Pass | Pas s |
| Example 13 | 36.0 | 64.0 | - | - | - | - | - | 0.44 | Pass | Pas s |

The plate of Example 5 was produced using a mixture of the same resin components in the same formulation as those of the sheet of Example 1, and the plate of Example 6 was produced using a mixture of the same resin components in the same formulation as those of the sheet of Example 2. In the comparison between Example 5 and Example 1 and the comparison between Example 6 and Example 2, the results of the n-heptane extraction test were substantially the same. Therefore, the results of the n-heptane extraction test for the plates of Examples 7 to 13 and Comparative Examples 3 to 7 can be regarded as equivalent to the test results for PTP packaging sheets produced using mixtures of the same resin components in the same formulations as those of Examples 7 to 13 and Comparative Examples 3 to 7.

As shown in Table 2, the plates of Examples 5 to 13 all have a biomass-derived polypropylene content of 10% by mass or more, and thus achieve a reduction in environmental impact. The plates of Comparative Examples 3 to 7 have a biomass-derived polypropylene content of less than 10% by mass, and are thus insufficient with respect to a reduction in environmental impact. Furthermore, all of the plates of Comparative Examples 3 to 7 failed the n-heptane extraction test. This is attributable to a small amount of biomass PP containing biomass-derived polypropylene and an increased amount of polypropylene containing a petroleum resin, resulting in an increased petroleum resin content of the plates. The results in Table 2 demonstrate that the amount of n-heptane extractables from plates, i.e., PTP packaging sheets, having a petroleum resin content of 13% by mass or less is 150 μg/mL or less.

Furthermore, the results of Example 13 demonstrate that the amount of n-heptane extractables from a plate produced using only biomass PP containing biomass-derived polypropylene as a resin component is reduced. Thus, such a plate achieves a sufficient reduction in environmental impact.

<Example 14>

A PTP packaging sheet (three layers, outer layer/central layer/outer layer) of Example 14 was produced as follows.

The resin components for the central layer shown in Table 3 were mixed according to the formulation shown in Table 3, and the resulting mixture was melt-kneaded.

The materials for forming the outer layers and the central layer were coextruded from a two-material, three-layer multi-manifold die at a die temperature of 210°C, while the extrusion rate was adjusted so that each outer layer had a thickness of 30 μm and the central layer had a thickness of 90 μm. The resulting sheet was cooled on a cast roll to produce a PTP packaging sheet.

The obtained PTP packaging sheet of the example was subjected to the evaluation tests [(1) n-heptane extraction test, (2) water vapor permeability (MOCON method), and (3) blister formability (FBP-M2)]. The results are shown in the following Table 3.

[Table 3]

| | | Biomass PP C14 HP640J (% by mass) | | | Petroleum resin (% by mass) | n-Heptane extraction test | | Water vapor permeability (MOCON method) | Blister formability FBP-M2 | |
|---|---|---|---|---|---|---|---|---|---|---|
| | | Biomass-derived PP | Petroleum-derived PP | Total | | μg/mL | Pass/Fail | $g/(m^2 \cdot d)$ | °C | Evaluation |
| Example 14 | Outer layer | 36 | 64 | 100 | - | 41 | Pass | 0.57 | 130 to 136 | ○ |
| | Central layer | 24.1 | 42.9 | 67 | 33 | | | | | |

As shown in Table 3, the PTP packaging sheet of Example 14, which has a three-layer structure including outer layers formed from biomass-derived PP and a central layer formed from biomass-derived PP and a petroleum resin, has an extremely low water vapor permeability of 0.8 or less and particularly excellent water vapor barrier properties. Furthermore, the sheet of Example 14 has a blister forming temperature range, which is defined as a temperature range in which an acceptable blister formed article is obtained, of 130°C to 136°C, and exhibits thermoformability over a wide temperature range below 140°C. Thus, the sheet was confirmed to exhibit excellent thermoformability.

## INDUSTRIAL APPLICABILITY

The PTP packaging sheet of the present invention is formed using a polypropylene resin containing biomass-derived polypropylene as a material, and thus achieves a reduction in environmental impact. In addition, the PTP packaging sheet of the present invention has an excellent balance of preservability of an object, water vapor barrier properties, and thermoformability, and thus can be suitably used as PTP packages for medical and food use.

## REFERENCE SIGNS LIST

1 PTP packaging sheet
2 surface resin layer
3 intermediate layer

## Claims

1. A PTP packaging sheet comprising
at least one polypropylene resin layer containing biomass-derived polypropylene, the at least one polypropylene resin layer having a biomass-derived polypropylene content of 10% by mass or more.

2. The PTP packaging sheet according to claim 1,
wherein an amount of n-heptane extractables from surfaces of the PTP packaging sheet is 150 μg/mL or less.

3. The PTP packaging sheet according to claim 1 or 2,
wherein the at least one polypropylene resin layer further comprises a petroleum resin.

4. The PTP packaging sheet according to claim 3,
wherein the at least one polypropylene resin layer has a petroleum resin content of 1% by mass or more and 13% by mass or less.

5. The PTP packaging sheet according to claim 1 or 2,
wherein the at least one polypropylene resin layer further comprises petroleum-derived polypropylene in the form of a homopolymer and/or a random copolymer.

6. The PTP packaging sheet according to claim 5,
wherein the at least one polypropylene resin layer has a petroleum-derived polypropylene content of 15% by mass or more and 90% by mass or less.

7. The PTP packaging sheet according to claim 1 or 2,
wherein the PTP packaging sheet has a multi-layer structure and includes surface resin layers each defining an outermost surface and having a petroleum resin content of 13% by mass or less.

8. The PTP packaging sheet according to claim 7,
wherein the surface resin layer contains biomass-derived polypropylene, and the surface resin layer has a biomass-derived polypropylene content of 40% by mass or less.

FIG. 1

1
2
3
2

## INTERNATIONAL SEARCH REPORT

International application No.
**PCT/JP2024/035096**

**A. CLASSIFICATION OF SUBJECT MATTER**

***B65D 65/40***(2006.01)i; ***B32B 27/32***(2006.01)i
FI: B65D65/40 D; B32B27/32 102

According to International Patent Classification (IPC) or to both national classification and IPC

**B. FIELDS SEARCHED**

Minimum documentation searched (classification system followed by classification symbols)

B65D65/40; B32B27/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-226829 A (TAISEI KAKO CO., LTD.) 08 December 2014 (2014-12-08) paragraphs [0001]-[0002], [0010], [0013], [0034]-[0037], fig. 1 | 1-8 |
| Y | JP 2019-135090 A (FUJIMORI KOGYO CO., LTD.) 15 August 2019 (2019-08-15) paragraphs [0006], [0020], [0023], fig. 1 | 1-8 |
| Y | JP 2023-21017 A (TORAY INDUSTRIES, INC.) 09 February 2023 (2023-02-09) paragraphs [0001], [0011], [0053]-[0054], [0112], tables 1-1 | 3-4, 7-8 |
| Y | JP 2022-128013 A (IDEMITSU UNITECH CO., LTD.) 01 September 2022 (2022-09-01) paragraphs [0001]-[0004], [0010], [0014], [0027]-[0028] | 3-4, 7-8 |
| A | JP 2016-7792 A (FUJIMORI KOGYO CO., LTD.) 18 January 2016 (2016-01-18) entire text, all drawings | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035096**

| Patent document cited in search report | Publication date (day/month/year) | Patent family member(s) | Publication date (day/month/year) |
|---|---|---|---|
| JP 2014-226829 A | 08 December 2014 | (Family: none) | |
| JP 2019-135090 A | 15 August 2019 | (Family: none) | |
| JP 2023-21017 A | 09 February 2023 | EP 4378680 A1<br>paragraphs [0001], [0011], [0053]-[0054], [0129], table 1-1-1 | |
| JP 2022-128013 A | 01 September 2022 | (Family: none) | |
| JP 2016-7792 A | 18 January 2016 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009083111 A
- JP 2022152666 A
- JP 2022061847 A